# EUROPÄISCHE PATENTSCHRIFT

(11) **EP 3 475 125 B1**
(45) Veröffentlichungstag und Bekanntmachung des Hinweises auf die Patenterteilung: **03.06.2020**
(21) Anmeldenummer: 17734256.5
(22) Anmeldetag: 14.06.2017
(51) Int. Cl.: B60R 11/02, B60R 11/00

(54) **HALTERSYSTEM FÜR EIN ELEKTRONISCHES GERÄT IN EINEM FAHRZEUG**
FIXING MEANS FOR AN ELECTRONIC DEVICE IN A VEHICLE
MOYENS DE SUPPORT D'UN APPAREIL ÉLECTRONIQUE POUR VEHICULES

(30) Priorität: 22.06.2016 DE 102016111448
(43) Veröffentlichungstag der Anmeldung: 01.05.2019
(73) Patentinhaber: BURY Sp. z o.o., 39-300 Mielec (PL)
(72) Erfinder: BURY, Henryk, 32584 Löhne (DE); BURY, Andrzej, 39-300 Mielec (PL)
(74) Vertreter: Gramm, Lins & Partner Patent- und Rechtsanwälte PartGmbB
(86) Internationale Anmeldenummer: PCT/EP2017/064600
(87) Internationale Veröffentlichungsnummer: WO 2017/220413

(56) Entgegenhaltungen:
- EP-A1- 2 000 364
- WO-A1-2006/010500
- WO-A1-2010/028541
- DE-A1- 10 062 172
- DE-A1-102013 203 920
- FR-A1- 2 972 694
- US-A1- 2004 028 219
- US-A1- 2004 091 102
- US-A1- 2007 170 330

## Beschreibung

Die Erfindung betrifft ein Haltersystem für ein elektronisches Gerät in einem Fahrzeug mit einem zur ortsfesten Befestigung vorgesehenen Aufnahmeteil und einer in das Aufnahmeteil einsetzbaren Halterung , an der das elektronische Gerät lösbar befestigbar ist, wobei das Aufnahmeteil einen Aufnahmekanal mit einer schlitzförmigen Eintrittsöffnung aufweist, in den ein komplementär zum Aufnahmekanal geformter, im montierten Zustand mit der Halterung verbundener Ansatz in einer Einschubrichtung einschiebbar und im eingeschobenen Zustand festlegbar ist.

Es sind zahlreiche Haltersysteme bekannt, mit denen ein Telekommunikationsgerät, insbesondere ein zur Durchführung von Telefonaten geeignetes Telekommunikationsgerät, in einem Fahrzeug befestigbar ist, um beispielsweise Telefonate führen zu können, ohne eine Hand vom Lenker nehmen zu müssen. Es hat sich dabei bewährt, ein Aufnahmeteil vorzusehen, das im Fahrzeug möglichst unauffällig platziert werden kann und den ästhetischen Eindruck der Innenausstattung des Fahrzeugs nicht stört, wenn keine Halterung und kein Telekommunikationsgerät am Aufnahmeteil befestigt sind.

US 2007/0170330 A1 , der ein Haltersystem gemäß dem Oberbegriff des Anspruchs 1 zu entnehmen ist, offenbart eine an einer Windschutzscheibe eines Fahrzeugs befestigtbare Halterung, die einen oben offenen, im Querschnitt rechteckigen Aufnahmeraum aufweist, in den ein Befestigungskörper eines Tragelements von oben einschiebbar ist. Die Vorderwand der Halterung ist mittig über ihre nahezu gesamte Höhe offen, sodass ein Tragarm durch die schlitzförmige Öffnung ragen kann. Am Ende des Tragarms befindet sich eine Kugel, die mit einer kugelförmigen Aufnahme eines Displays zu dessen Halterung zusammenwirken kann.

Neben der Aufgabe des mechanischen Haltens des Telekommunikationsgeräts kann die Halterung ferner die Aufgabe erfüllen, das in sie eingesetzte Telekommunikationsgerät mit Strom zu versorgen, sodass das Telekommunikationsgerät im in die Halterung eingesetzten Zustand keine elektrische Energie aus dem eigenen Akku verbraucht und darüber hinaus der eigene Akku durch das elektrische System des Fahrzeugs aufgeladen werden kann.

Ein bekanntes System, wie es beispielsweise in EP 1 266 456 B1 beschrieben ist, weist ein Aufnahmeteil auf, in das eine Halterung einsteckbar ist, wobei beim Einstecken der Halterung Kontakte der Halterung mit Kontakten des Aufnahmeteils in Berührung kommen, um auf diese Weise eine Versorgungsspannung und ggf. weitere elektrische Signale auf die Halterung zu übertragen. Die Halterung ist dabei an einen bestimmten Gerätetyp mechanisch und elektrisch angepasst, um der Tatsache Rechnung zu tragen, dass unterschiedliche Typen von Telekommunikationsgeräten sowohl unterschiedliche mechanische Abmessungen als auch unterschiedliche Positionen und Ausführungen von elektrischen Verbindungen aufweisen.

EP 2 000 364 A1 beschreibt ein Haltersystem, bei dem im Armaturenbrett eines Fahrzeugs ein durch eine federnde Klappe verschlossener Aufnahmeraum vorgesehen ist, in den ein entsprechender Ansatz eines Geräteträgers mechanisch rastend einschiebbar ist. Beim Einsetzen wird auch ein elektrischer Kontakt hergestellt.

Aufgrund der Tatsache, dass die heutigen Telekommunikationsgeräte nahezu alle ihre elektrischen Signale in einem Nahfeld drahtlos übertragen können, wie beispielsweise über Bluetooth-Signale, hat sich die erforderliche Kontaktierung der Halterung mit dem Aufnahmeteil auf die Übertragung der Versorgungsspannung reduziert (vgl. DE 10 2005 044 946 B4). In vielen Fällen wird lediglich zusätzlich ein Schaltsignal übertragen, mit dem die Leitung der Versorgungspannung auf die Halterung nur in Abhängigkeit von einer Zündschlossstellung bzw. Detektion der Startfähigkeit des Fahrzeugs aufgrund eines Zugangscodes gesteuert wird, um ein versehentliches Entladen der Fahrzeugbatterie in Abwesenheit des Fahrers, insbesondere bei einem längeren Stehenlassen des Fahrzeugs, zu vermeiden. Alternativ ist es natürlich möglich, einen Pol der Versorgungs-Gleichspannung, der nicht den Massepol bildet, über einen entsprechenden Schalter mit dem Aufnahmeteil und daraus folgend, mit der Halterung zu verbinden.

Das bekannte System hat dazu geführt, dass die Installation in dem Fahrzeug unverändert bleiben konnte, wenn ein anderes Telekommunikationsgerät benutzt werden sollte. Diesem Umstand war Rechnung zu tragen, weil bekanntlich die Verweildauer von Telekommunikationsgeräten bei einem Benutzer häufig sehr kurz ist, da immer neue Telekommunikationsgeräte mit immer neuen Funktionen und Möglichkeiten entwickelt werden und in kurzen zeitlichen Abständen auf den Markt kommen. In diesem Fall war es dann lediglich erforderlich, für das neue Telekommunikationsgerät eine passende Halterung zu beschaffen, da die Verbindung zwischen der Halterung und dem Aufnahmeteil für dieses System immer gleich war.

Es sind ferner seit einiger Zeit Telekommunikationsgeräte bekannt und auf dem Markt, die nicht mehr über eine Kabelverbindung, sondern über eine Induktionsspule induktiv aufladbar sind. Die für das entsprechende Telekommunikationsgerät angepasste Halterung verfügte dabei über eine entsprechende Induktionsspule, die so positioniert ist, dass sie mit der Induktionsspule des Telekommunikationsgeräts mit einem möglichst hohen Wirkungsgrad für die Ladung zusammenwirken kann.

In früheren Zeiten ist versucht worden, den Aufwand für eine speziell an das Telekommunikationsgerät angepasste Halterung dadurch zu vermeiden, dass eine Halterung mit verstellbaren Haltearmen verwendet worden ist, sodass unterschiedliche Größen eines Telekommunikationsgeräts von der Halterung nach einer entsprechenden Verstellung der Haltearme aufgenommen werden konnten. Diese Geräte haben jedoch regelmäßig keine elektrische Verbindung ermöglicht und dienten daher in erster Linie als mechanische Halterung. Soweit der Akkumulator des Telekommunikationsgeräts in der Halterung aufgeladen werden sollte, wurde für eine gesonderte elektrische Verbindung, beispielsweise mittels eines geeigneten Ladekabels, gesorgt, wofür üblicherweise ein zu einem Zigarettenanzünder passender Adapter verwendet wurde. Da eine derartige Lösung moderneren Ansprüchen nicht mehr genügt, kommt eine derartige Halterung für anspruchsvollere Lösungen nicht in Betracht. DE 10 2004 062 178 B4 sieht eine Ladekabelverbindung zwischen Aufnahmeteil und Halterung vor.

Das bisherige Haltersystem hat sich bewährt und zahlreiche Fortschritte mit sich gebracht. Insbesondere im Hinblick auf das Design der Innenräume der Fahrzeuge, insbesondere von Personenkraftwagen, kann ein verbautes sichtbares Aufnahmeteil als störend empfunden werden. Der Positionierung der entsprechenden Aufnahmeteile sind daher aufgrund der bisherigen Konstruktionen Grenzen gesetzt, wenn nicht das Aufnahmeteil in aufwändiger Weise durch eine Klappe o. ä. verdeckt werden sollte. Darüber hinaus hat sich die verwendete mechanische Verriegelung der Halterung an dem Aufnahmeteil als eine hohen Komfortansprüchen nicht mehr genügende Handhabung herausgestellt.

Der vorliegenden Erfindung liegt daher die Aufgabe zugrunde, ein auf einem neuen Konzept beruhendes Haltersystem zu entwickeln, das eine unauffällige und ästhetisch ansprechende Montage innerhalb des Fahrzeugs ermöglicht, an die Funktionen moderner Telekommunikationsgeräte angepasst ist und eine komfortable Handhabung ermöglicht.

Diese Aufgabe wird bei einem Haltersystem der eingangs erwähnten Art dadurch gelöst, dass in wenigstens einer Begrenzung des Aufnahmekanals wenigstens ein Magnet so angeordnet ist, dass in der Einschubrichtung wirksame Magnetpole entstehen und dass in entsprechender Weise im Ansatz Magnetpole ausgebildet sind, die bei richtiger Ausrichtung den Ansatz in eine Festlegestellung in dem Aufnahmekanal hineinziehen und bei falscher Ausrichtung das Erreichen der Festlegestellung behindern.

Mit der vorliegenden Erfindung wird von dem Konzept eines plattenförmigen Aufnahmeteils, das entsprechende Verriegelungselemente aufweist, mit dem die Rückseite der Halterung an dem plattenförmigen Aufnahmeteil mechanisch verriegelbar ist, abgegangen und statt dessen ein Aufnahmeteil vorgesehen, das selbst bei einer nachträglichen Montage lediglich ein kleines, flaches Gehäuse ausbildet, weil ein breiter Aufnahmekanal mit einer geringen Höhe gebildet wird, sodass eine schlitzförmige Eintrittsöffnung entsteht, in die der Ansatz einschiebbar ist. Der Ansatz ist in dem Aufnahmekanal im eingeschobenen Zustand festlegbar, sodass auf diese Weise eine mechanisch stabile Halterung gewährleitet wird. Da die Festlegung des Ansatzes in dem Aufnahmekanal innerhalb des Aufnahmekanals erfolgt, erscheint nach außen sichtbar nur das flache Gehäuse des Aufnahmeteils ohne etwaige Verriegelungselemente. Das erfindungsgemäße Aufnahmeteil ist universell ausgebildet, weil es eine Verbindung mit unterschiedlichen Ansätzen, die zu unterschiedlichen Geräten gehören können, ermöglicht. Die Ausbildung eines Aufnahmekanals in dem Aufnahmeteil ermöglicht eine stabile Führung eines passenden Ansatzes sowie eine stabile Verriegelung des Ansatzes bzw. des mit dem Ansatz versehenen Geräts, die mit üblichen Fahrzeugbewegungen nicht ungewollt gelöst wird. Aufgrund der universellen Ausbildung des Aufnahmeteils ist es auch zur Aufnahme anderer elektronischer Geräte, die keine Telekommunikationsgeräte sind, geeignet, beispielsweise Duftspender, Taschenlampen o. dgl.

In wenigstens einer Begrenzung des Aufnahmekanals ist wenigstens ein Magnet so angeordnet, dass in der Einschubrichtung wirksame Magnetpole entstehen. In entsprechender Weise sind im Ansatz Magnetpole ausgebildet, die bei richtiger Ausrichtung des Ansatzes in dem Aufnahmekanal den Ansatz in eine Festlegestellung in dem Aufnahmekanal hineinziehen und bei falscher Ausrichtung das Erreichen der Festlegestellung behindern.

Der Ansatz ist in dem Aufnahmeteil daher nur dann vollständig einschiebbar und festlegbar, wenn der Ansatz in einer vorgesehenen Weise richtig ausgerichtet in die Eintrittsöffnung eingeschoben wird. Dies ist insbesondere von Bedeutung, wenn zwischen dem Aufnahmeteil und dem Ansatz eine elektrische Verbindung hergestellt wird, die nicht mit einer falschen Polung erfolgen darf, wie dies bei einer Gleichspannungsversorgung in einem Fahrzeug der Fall ist. Die Magnetpole verhindern eine nicht vorgesehene Ausrichtung des Ansatzes in dem Aufnahmekanal - und somit eine etwaige Verpolung eines anzuschließenden Geräts, insbesondere Telekommunikationsgeräts, - und ermöglichen dabei eine Ausbildung des Ansatzes ohne störende mechanische Codierung, sodass auch der Ansatz optisch ansprechend mit einer glatten Oberfläche ausgebildet werden kann, die kein Verschmutzungsrisiko durch schwer zu reinigende Ecken und Absätze mit sich bringt. Darüber hinaus wird durch die Magnetpole ein sehr angenehmes Handhabungsgefühl erreicht, da die Magnetpole den Ansatz und das damit verbundene Gerät in den Aufnahmekanal in die Festlegestellung hineinziehen und somit dem Nutzer ein komfortables Handhabungsgefühl vermitteln. Der Nutzer muss nicht - wie bei früheren Systemen - mit einer möglichst dosierten Kraft einen Rastmechanismus überwinden und durch ein entsprechendes Geräusch feststellen, ob die ordnungsgemäße Verriegelung in dem Aufnahmeteil erfolgt ist. Vielmehr wird erfindungsgemäß dem Nutzer ein Gefühl der Automatisierung vermittelt, wenn sich der richtig eingesetzte Ansatz mit Hilfe der Magnetkraft in seine Festlegestellung hineinzieht.

Vorzugsweise wird in der Festlegeposition ein mechanisches Einrasten durchgeführt, aus dem der Ansatz nur mit einer gewissen Zugkraft wieder herausgezogen werden kann. Auf diese Weise wird die Festlegung des Ansatzes in dem Aufnahmekanal zusätzlich gesichert. Dadurch wird es möglich, die durch die Magnetpole bewirkte Einziehkraft auf den Ansatz in einer für die Handhabung geeigneten Weise zu dosieren, ohne allein durch die Magnetpole bereits die vollständige Festlegekraft für den Ansatz in den Aufnahmekanal aufbringen zu müssen.

Besonders bevorzugt ist es, wenn das Haltersystem auch eine Übertragung elektrischer Leistung ermöglicht, insbesondere zum Aufladen eines Telekommunikationsgeräts, eines Taschenlampenakkumulators, einer Powerbank o. dgl. Hierzu ist in einer bevorzugten Ausführungsform der Erfindung das Aufnahmeteil mit elektrischen Anschlussleitungen verbindbar und es weist Anschlusskontakte in einer Stirnwand des Aufnahmekanals auf. Hierzu passend ist der Ansatz mit die Anschlusskontakte in der Festlegstellung kontaktierenden Kontaktelementen und damit verbundenen Leitungen zur Zuführung elektrischer Potentiale zu der Halterung versehen. Die erfindungsgemäße Positionierung des Ansatzes in dem Aufnahmekanal stellt dabei sicher, dass die Kontaktelemente des Ansatzes einen elektrischen Kontakt mit den Anschlusskontakten des Aufnahmeteils herstellen, sodass auf diese Weise beispielweise die Versorgungsspannung vom Aufnahmeteil auf den Ansatz übertragbar ist. Vom Ansatz wird eine entsprechende Übertragung der Versorgungsspannung auf die Halterung bewirkt.

Um einen Kurzschluss durch in den Aufnahmekanal gelangende leitende Fremdkörper zu verhindern, kann es in einer Ausführungsform der Erfindung vorgesehen sein, die Stirnwand des Aufnahmekanals mit wenigstens einem Vorsprung neben den Anschlusskontakten zu versehen. Eine beispielweise in den Aufnahmekanal gelangende Münze ist dann nicht in der Lage, die Anschlusskontakte zu berühren und miteinander zu einem Kurzschluss zu verbinden. Dementsprechend findet eine elektrische Verbindung nur über den Ansatz statt, der auf seiner freien Stirnseite wenigstens eine entsprechende Ausnehmung aufweist, die den Vorsprung im eingeschobenen Zustand aufnimmt.

Der Aufnahmekanal weist in einer Ausführungsform der Erfindung im Bereich der schlitzförmigen Eintrittsöffnung eine wenigstens doppelt so große Breite wie Höhe auf. Weiter bevorzugt ist es, wenn sich die Höhe mit zunehmender Entfernung von der Eintrittsöffnung verringert Dementsprechend weist der Ansatz eine gleiche Verringerung seiner Höhe zu seinem freien Ende hin auf. Diese Verringerung der Höhe kann stufenförmig erfolgen. In einer Ausführungsform der Erfindung findet die Verringerung der Höhe stetig statt, sodass der Ansatz bezüglich seiner Höhe konisch verjüngend ausgebildet ist.

Die Eintrittsöffnung kann mit einer schwenkbaren Klappe versehen sein, die mittels einer Feder in eine die Eintrittsöffnung verschließende Stellung vorgespannt ist und durch den eingeschobenen Ansatz in eine den Aufnahmekanal öffnende Stellung verschwenkt wird. Dadurch ist es möglich, die Eintrittsöffnung immer im verschlossenen Zustand zu halten, solange kein Ansatz in die Eintrittsöffnung eingeschoben wird. Vorzugsweise steht dabei die Klappe in einem stumpfen Winkel zu der Öffnungsstellung, um so einer Öffnung der Klappe durch einen zufällig gegen die Klappe fallenden Gegenstand zu erschweren.

Die Anbringung des Aufnahmeteils in dem Fahrzeug kann an verschiedensten Stellen erfolgen. Wenn der Ansatz starr mit der Halterung verbunden ist, legt die Positionierung des Aufnahmeteils auch die Positionierung und ggf. Ablesbarkeit des Telekommunikationsgeräts weitgehend fest. Zwar ist es möglich, das Telekommunikationsgerät beispielsweise mit einer Kugellagerung am Ansatz verschwenkbar anzubringen, dennoch ist der Ort des Telekommunikationsgeräts durch die Position des Aufnahmeteils bestimmt. Erfindungsgemäß ist eine Abhilfe dadurch vorgesehen, dass der Ansatz Teil eines Zwischenstücks ist, das als schwenkbarer Arm ausgebildet ist, dessen freies Ende eine Befestigungsplatte zur Befestigung der Halterung aufweist. Die Halterung kann somit an dem Zwischenstück lösbar angebracht werden. Durch die Verschwenkung des Arms kann das von der Halterung gehaltene Telekommunikationsgerät in eine günstigere Position verschwenkt werden.

Dies ist insbesondere möglich, wenn der schwenkbare Arm wenigstens drei Abschnitte und zwei horizontale, voneinander beabstandete Drehgelenke und ein senkrecht dazu stehendes vertikales Drehgelenk aufweist. Auf diese Weise kann die Positionierung des von der Halterung gehaltenen Geräts in einem großen Bereich erfolgen, wobei insbesondere durch eine Z-artige Verschwenkung der Abschnitte über die beiden horizontalen Drehgelenke die Höhe und durch das vertikale Drehgelenk die Ausrichtung des Telekommunikationsgeräts einstellbar sind.

In einer vorteilhaften Ausführungsform der Erfindung ist die Halterung zur Aufnahme unterschiedlicher Telekommunikationsgeräte mit verstellbaren Haltearmen versehen. Das erfindungsgemäße Haltersystem ermöglicht somit die Abkehr von an ein spezielles Telekommunikationsgerät angepassten Halterungen und die Verwendung quasi universeller Halterungen, in denen Telekommunikationsgeräte unterschiedlicher Abmessungen befestigbar sind. Dies ist insbesondere von Vorteil, wenn die Halterung eine Induktionsspule in ihrer Rückwand und eine Anzeige aufweist, die eine korrekte Positionierung des für eine induktive Ladung vorgesehenen Telekommunikationsgeräts vor der Induktionsladespule bei einer Verstellung eines als Fuß ausgebildeten und das Telekommunikationsgerät tragenden Haltearms anzeigt. Bei einer induktiven Ladung des Geräts ist eine galvanische elektrische Verbindung zwischen der Halterung und dem Telekommunikationsgerät nicht mehr erforderlich. Daher kommt es nur noch darauf an, dass die Induktionsladespule der Halterung mit der entsprechenden Induktionsspule des Telekommunikationsgeräts optimal positioniert wird, damit eine Aufladung des Telekommunikationsgeräts in der Halterung mit einem möglichst hohen Wirkungsgrad erfolgen kann.

Da die Ladespulen der Telekommunikationsgeräte regelmäßig in der Mittenachse angeordnet sind, ist es bevorzugt, wenn zwei seitliche Haltearme nur gekoppelt mit-einander verstellbar sind, sodass unterschiedlich bereite Telekommunikationsgeräte immer mittig vor der Rückwand positionierbar sind.

Die Erfindung soll im Folgenden anhand von in der Zeichnung dargestellten Ausführungsbeispielen näher erläutert werden. Es zeigen:
- Figur 1: eine perspektivische Darstellung eines Gehäuses eines Aufnahmeteils;
- Figur 2: einen Längsschnitt durch das Aufnahmeteil gemäß Figur 1;
- Figur 3: eine perspektivische Ansicht eines Aufnahmeteils und eines Zwischenstücks mit einem Ansatz zum Einschieben in einen Aufnahmekanal des Aufnahmeteils;
- Figur 4: eine Draufsicht auf die Anordnung gemäß Figur 3;
- Figur 5: eine Darstellung gemäß Figur 3 mit dem in den Aufnahmekanal eingeschobenen Ansatz;
- Figur 6: eine Draufsicht auf die Anordnung gemäß Figur 5;
- Figur 7: einen Teil-Längsschnitt gemäß der Line A-A in Figur 6, gemäß Figur 7a in der noch nicht eingesteckten Stellung und gemäß Figur 7b in der eingesteckten Stellung des Ansatzes in dem Aufnahmekanal;
- Figur 8: eine Seitenansicht einer Halterung mit ausgefahrenen Haltearmen;
- Figur 9: die Seitenansicht gemäß Figur 8 mit maximal eingefahrenen Haltearmen;
- Figur 10: eine perspektivische Darstellung der Halterung mit einem gestrichelt angedeuteten Telekommunikationsgerät;
- Figur 11: eine perspektivische Darstellung der Rückseite der Halterung sowie des zur Rückseite der Halterung zeigenden Abschnitts des Zwischenstücks;
- Figur 12: eine Draufsicht auf ein Aufnahmeteil und ein auf dem Aufnahmeteil befestigbares Gerät;
- Figur 13: einen Längsschnitt entlang der Linie A-A in Figur 12;
- Figur 14: eine perspektivische Darstellung des Geräts mit Blick auf eine Stirnseite;
- Figur 15: eine perspektivische Darstellung des auf das Aufnahmeteil aufgeschobenen Geräts mit Blick auf die gegenüberliegende Stirnseite des Geräts;
- Figur 16: eine Draufsicht des Geräts mit Darstellung einer Schnittlinie A-A;
- Figur 17: einen Schnitt durch das Gerät gemäß Figur 16 entlang der Linie A-A.

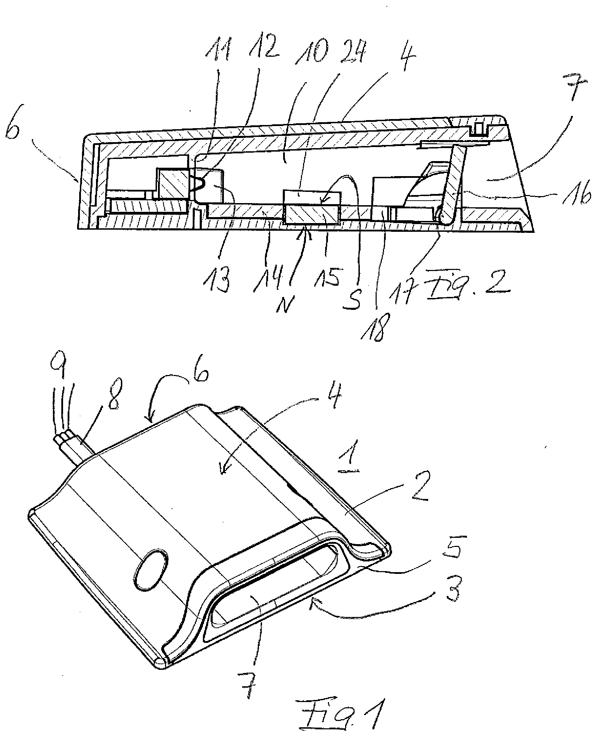

Figur 1 zeigt ein Aufnahmeteil, das ein Gehäuse 2 mit einer ebenen Unterseite 3 und einer geschwungenen, gewölbten Oberseite 4 aufweist. Das Gehäuse 2 ist mit einer vorderen Stirnseite 5 und einer rückwärtigen Stirnseite 6 versehen. Wie Figur 2 verdeutlicht, ist die rückwärtige Stirnseite geschlossen, während die vordere Stirnseite 5 eine schlitzförmige Eintrittsöffnung 7 aufweist, deren Breite deutlich größer ist als deren Höhe, wobei das Verhältnis von Breite zu Höhe der Eintrittsöffnung größer als 2:1, insbesondere größer als 2,5:1 und vorzugsweise größer als 3:1 ist.

Die Figuren 1 und 2 zeigen, dass die geschwungen gewölbte Oberseite 4 von der vorderen Stirnseite 5 aus zur hinteren Stirnseite 6 kontinuierlich in ihrer Höhe abfällt.

Das Gehäuse 2 ermöglicht an der rückwärtigen Stirnseite 6 die Durchführung eines elektrischen Anschlusskabels 8, das im dargestellten Ausführungsbeispiel als Flachkabel mit drei Leitern 9 ausgebildet ist. Die drei Leiter können den "+"-Pol, den "-"-Pol (Masse) und ein Schaltsignal "Zündung ein/aus" führen.

Die geschwungene gewölbte Oberseite 4 des Gehäuses 2 liegt seitlich von der Eintrittsöffnung 7 über die gesamte Länge des Gehäuses unmittelbar auf der Unterseite 3 auf und erhebt sich von dort zur Mitte hin, wodurch der Platz für die rechteckige schlitzförmige Eintrittsöffnung 7 im Bereich der vorderen Stirnseite 5 geschaffen wird. Im Innern des Gehäuses ist ein von der Eintrittsöffnung 7 sich nach hinten erstreckender Aufnahmekanal 10 ausgebildet, der sich aufgrund der nach hinten abfallenden Oberseite 4 in entsprechender Weise in seiner Höhe nach hinten kontinuierlich verkleinert und an einer Stirnwand 11 endet. Durch die Stirnwand 11 ragen drei als Federkontakte ausgebildete Kontakte 12, die jeweils mit einem der drei Leiter 9 verbunden sind. Zwischen den Kontakten 12 befinden sich in der Stirnwand 11 Vorsprünge 13, die sich in den Aufnahmekanal 10 weiter hinein erstrecken als die Federkontakte 12. Dadurch wird erreicht, dass die Kontakte 12 beispielsweise nicht mit einer in den Aufnahmekanal 10 hineinfallenden oder hineingesteckten Münze geschlossen werden können.

In einem Boden 14 des Aufnahmekanals befinden sich vorzugsweise mehrere Magnete 15, die vorzugsweise Permanentmagnete sind und von denen in Figur 2 nur einer dargestellt ist. Die Permanentmagnete bilden gleichgerichtet einen magnetischen Nordpol N und einen magnetischen Südpol S aus, die quer zur Längsrichtung des Aufnahmekanals 10 (Einschubrichtung) hintereinander liegen, sodass der Südpol S zum Aufnahmekanal 10 hin- und der Nordpol N vom Aufnahmekanal 10 wegzeigend angeordnet ist.

Die schlitzförmige Eintrittsöffnung 7 ist durch eine schwenkbar gelagerte Klappe 16 unter der Wirkung einer Feder um ein Drehlager 17 in eine verschlossene Stellung geschwenkt, die in Figur 2 dargestellt ist. Dabei ist das freie Ende der Klappe etwas weiter als 90° gegenüber dem Boden verschwenkt, sodass die Klappe 16 mit dem Boden 14 einen stumpfen Winkel auf der Innenseite des Aufnahmekanals 10 bildet. Ein auf die Klappe 16 wirkender schmaler Gegenstand rutscht somit in Richtung des Drehlagers 17 ab und erschwert die Öffnung der Klappe 16. Zum Öffnen des Aufnahmekanals 10 muss die Klappe 16 aus der in Figur 2 dargestellten geschlossenen Stellung nach innen in den Aufnahmekanal 10 hineingeschwenkt werden, bis die Klappe in einer passenden Ausnehmung 18 des Bodens 14 zu liegen kommt und so den Aufnahmekanal 10 freigibt.

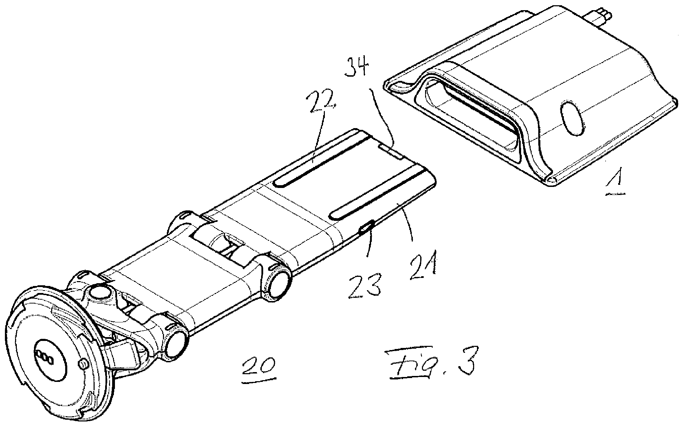

Figur 3 zeigt ein zur Aufnahme in dem Aufnahmeteil 1 ausgebildetes Zwischenstück 20, das einen Ansatz 21 aufweist, dessen Form der Form des Aufnahmekanals 10 angepasst ist. Demgemäß verjüngt sich der Ansatz 21 in seiner Höhe kontinuierlich, sodass er in dem Aufnahmekanal 10 stabil und mit geringen Toleranzen geführt ist.

Der Ansatz 21 weist zwei in seine Oberfläche auf der Oberseite eingesetzte Streifen 22 auf. Zwei entsprechende Streifen 22 befinden sich ferner auf der in Figur 3 nicht dargestellten Unterseite. Die Streifen 22 bestehen aus Textil, insbesondere beflocktem Textil, und ragen als Kratzschutz bei der Einschubbewegung etwas über die benachbarte Oberfläche heraus.

Beim Einschieben des Ansatzes 21 in den Aufnahmekanal 10 ergibt sich eine Festlegestellung aus seitlich an dem Ansatz vorgesehene Rastnasen 23, die in entsprechende Rastausnehmungen 24 (Figur 2) des Aufnahmekanals 10 federnd einrasten können. Hierzu sind die Rastnasen 23 in üblicher Weise mit einer sägezahnförmigen Anlaufschräge versehen, an die sich eine Rastschräge mit einer wesentlich größeren Steigung anschließt. Dadurch benötigt das Einziehen in die Raststellung deutlich weniger Kraft als das Herausziehen des Ansatzes 21 aus der Raststellung. Der Ansatz 21 weist an seinem vorderen freien Ende eine Ausnehmung 34 auf, in der der zwischen den Kontakten 12 in der Stirnwand 11 des Aufnahmekanals 10 befindliche Vorsprung 13 aufgenommen wird, sodass der Ansatz 21 mit (nicht dargestellten) stirnseitigen Kontaktflächen die Kontakte 12 kontaktieren kann.

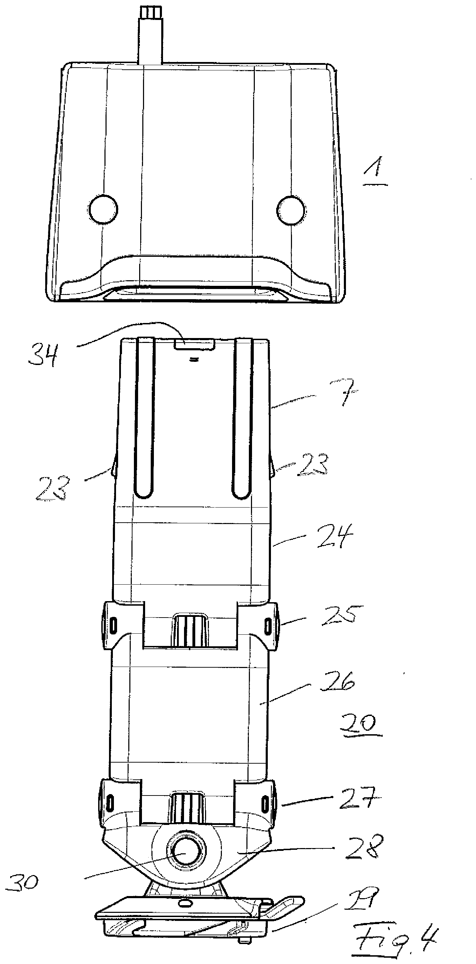

Die Figuren 3 und 4 verdeutlichen, dass der Ansatz 7 Teil eines ersten Abschnitts des Zwischenstücks 20 ist. Der erste Abschnitt 24 ist über ein erstes horizontales Drehgelenk 25 mit einem zweiten Abschnitt 26 des Zwischenstücks 20 verbunden. Dieses bildet ein starres Verbindungsstück und ist über ein zweites horizontales Drehgelenk 27 mit einem dritten Abschnitt 28 des Zwischenstücks 20 verbunden. Die drei Abschnitte 24, 26, 28 des Zwischenstücks 20 bilden somit einen Gerätearm, der durch eine mehr oder weniger starke Z-förmige Abwinkelung der Abschnitte zueinander die Einstellung unterschiedlicher Höhe und unterschiedlicher Abstände zum Aufnahmeteil 1 ermöglicht, wenn das Zwischenstück 20 in das Aufnahmeteil 1 eingeschoben ist.

An dem dritten Abschnitt 28 ist eine kreisförmig ausgebildete Befestigungsplatte 29 über ein senkrecht zu den Achsen der horizontalen Drehgelenke 25, 27 stehendes vertikales Drehgelenk 30 verbunden.

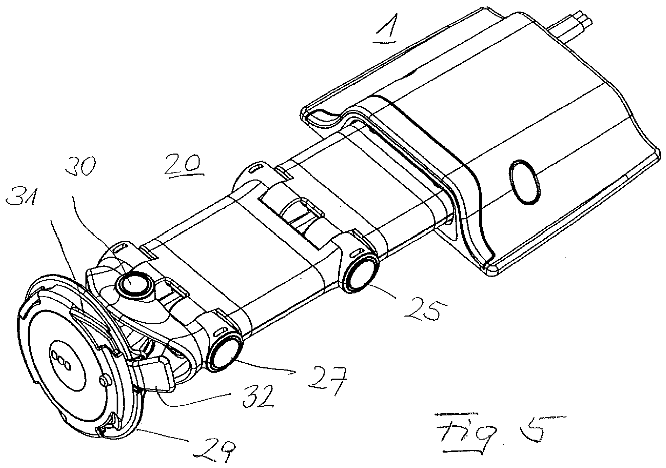

Dadurch ist die Befestigungsplatte 29 um eine vertikale Achse schwenkbar. Wie insbesondere Figur 5 erkennen lässt, ist die Befestigungsplatte 29 mit einem Twist-Lock-Verschluss versehen. Durch einen Ansatz entsprechender Rastnocken in einer Ausgangsstellung können diese mit einer Drehbewegung auf spiralförmig angeordneten Rastschrägen laufen und durch die Wirkung einer federnden Platte in eine Raststellung hinter der Rastschräge gedrückt werden. Mit Hilfe eines Hebels 32 kann der Federandruck gelöst werden, sodass ein Zurückdrehen aus dem Twist-Lock-Verschluss 31 möglich ist.

Über die Drehgelenke 25, 27 und 30 werden durch das Zwischenstück 20 die elektrischen Potentiale geleitet und gelangen auf drei unsymmetrisch angeordnete Kontaktflächen 33 auf der Befestigungsplatte 29, was unten noch näher erläutert wird.

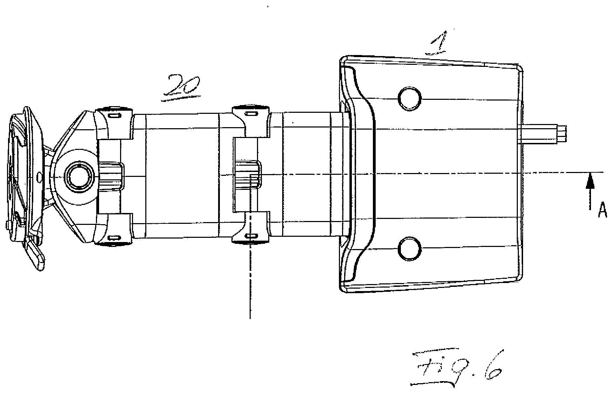

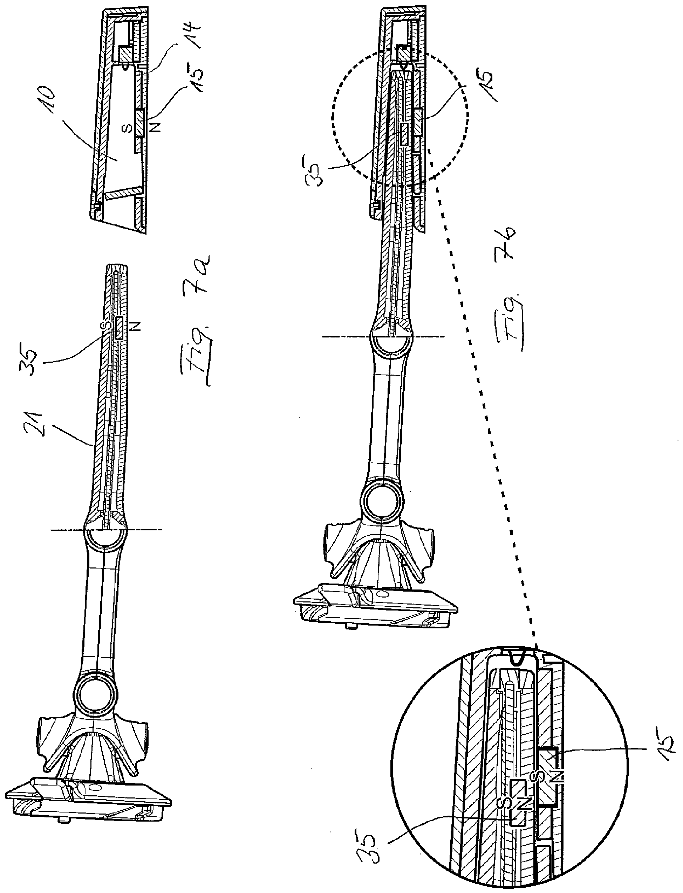

Die Figuren 6 und 7a und 7b verdeutlichen noch einmal die Befestigung des Zwischenstücks 20 in dem Aufnahmeteil 1 durch Einschieben des Ansatzes 21 in den Aufnahmekanal 10. Figur 7 lässt dabei die durch den Ansatz 7b heruntergedrückte Klappe 16 erkennen.

Figur 7a lässt erkennen, dass die im Boden 14 des Aufnahmekanals 10 befindlichen Magnete 15 einen zum Aufnahmekanal 10 zeigenden Magnetpol (hier Südpol S) und einen vom Aufnahmekanal 10 wegzeigenden Magnetpol (hier Nordpol N) aufweisen. Der Ansatz 21 ist mit entsprechenden Magneten 35 versehen, die eine ebenfalls quer zur Längsachse des Ansatzes 21 verlaufende Ausrichtung eines Nordpols N und eines Südpols S aufweisen.

Wie Figur 7b verdeutlicht, wirken die Magnet 15, 35 beim Einschieben des Ansatzes 21 in den Aufnahmekanal 10 zusammen. Die Magnetpole N, S sind dabei so positioniert, dass im vollständig eingeschobenen Zustand des Ansatzes 21 der Magnetpol N des Magneten 35 im Ansatz 21 dem Magnetpol S des Magneten 15 im Boden 14 des Aufnahmekanals 10 angenähert wird. Dadurch wird der Ansatz 10 magnetisch in den Aufnahmekanal 10 hineingezogen.

Sollte hingegen der Ansatz 21 in einer falschen, um 180° gedrehten Stellung in den Aufnahmekanal 10 eingeschoben werden, nähern sich erkennbar gleichnamige Pole N oder S einander an, wodurch eine zunehmende Gegenkraft gegen das Einschieben des Ansatzes 21 in den Aufnahmekanal 10 entsteht. Es ist daher mit normalem Kraftaufwand nicht möglich, den Ansatz 21 in der um 180° gedrehten (falschen) Stellung soweit in den Aufnahmekanal 10 zu schieben, dass eine Rastposition erreicht wird. In der richtigen Ausrichtung des Ansatzes 21 wird hingegen der Ansatz 21 in den Aufnahmekanal 10 durch die Magnete 15, 35 bis in die Festlegestellung hineingezogen, die sich aus dem Zusammenwirken der Rastnasen 23 und der Rastausnehmungen 24 (Figur 2) ergibt. Die maximale Magnetkraft wird erreicht, wenn die ungleichnamigen Pole der Magneten 15, 35 vollständig zueinander ausgerichtet sind, also mit ihren Mittenachsen miteinander fluchten. Wie Figur 7b, insbesondere mit der dargestellten Vergrößerung, verdeutlicht, muss diese Stellung in der Praxis aber nicht exakt erreicht werden.

Die Drehgelenke 25, 27, 30 des Zwischenstücks 20 sind als selbsthemmende Drehgelenke ausgebildet, indem sie mit gegeneinander spannbaren Platten versehen sind. Durch abwechselnde Ausbildung von metallischen Platten und isolierenden Platten lassen sich über die Drehgelenke die elektrischen Potentiale übertragen.

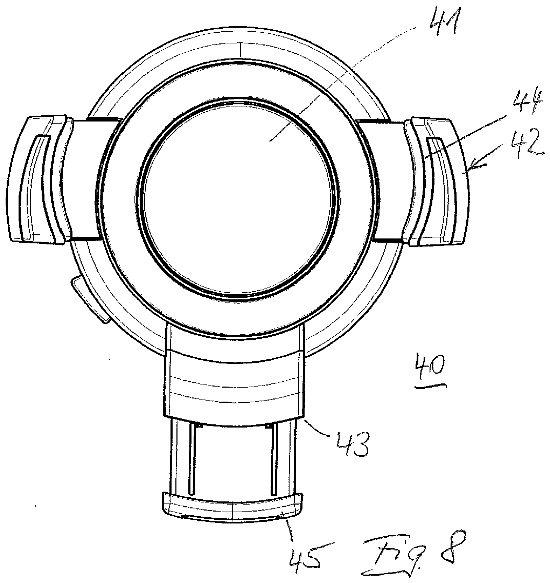

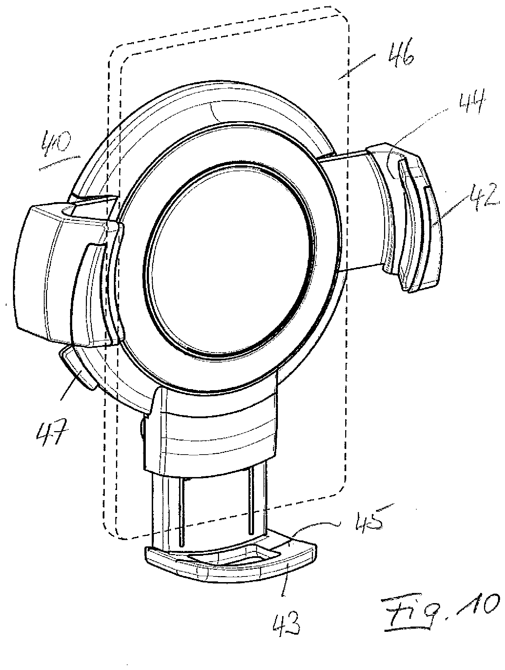

An die Befestigungsplatte 29 des Zwischenstücks 20 ist eine Halterung 40 rastend ansetzbar, die in den Figuren 8 bis 11 dargestellt ist. Die Halterung 40 weist eine kreisrunde, der Form der Befestigungsplatte 29 entsprechende Rückwand 41 auf, von der aus sich zwei seitliche Haltearme 42 in seitlicher Richtung und ein als Fuß ausgebildeter Haltearm 43 nach unten erstrecken. Die Haltearme 42, 43 sind mit Klemmbacken 44, 45 versehen, die zur Anlage an einem im Wesentlichen als flacher Quader ausgebildeten Telekommunikationsgerät 46 (Figur 10) bestimmt sind.

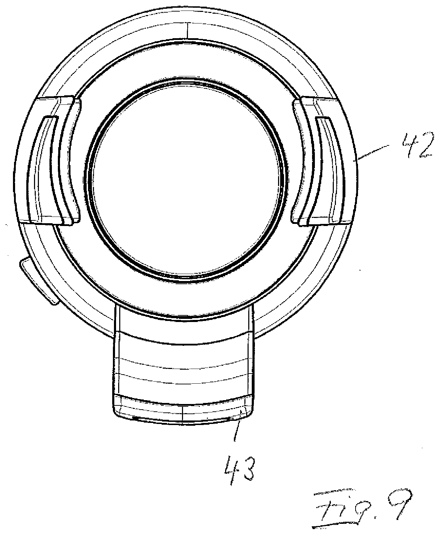

Figur 8 zeigt die Haltearme 42, 43 in ihrer maximal ausgefahrenen Position, Figur 9 in ihrer maximal eingefahrenen Position.

Die Haltearme 42, 43 sind in an sich bekannter Weise aus der in Figur 8 maximal ausgefahrenen Stellung nur in einer Richtung verstellbar. Gemäß Figur 10 wird das Telekommunikationsgerät 46 in die Halterung 40 mit den maximal ausgefahrenen Haltearmen 42, 43 eingesetzt. Danach wird der als Fuß ausgebildete Haltearm 43 nach oben verschoben, also zur Rückwand 41 hin eingezogen bis eine für das Telekommunikationsgerät 46 geeignete Position erreicht ist. Danach werden die seitlichen Haltearme 42 eingefahren, wobei deren Bewegung miteinander gekoppelt ist, sodass nur eine zur Mittenachse symmetrische Verstellung der seitlichen Haltearme 42 möglich ist. Dadurch wird erreicht, dass das Telekommunikationsgerät immer symmetrisch zur vertikalen Mittenachse der Befestigungsplatte 29 gehalten wird.

Die Rückwand 41 ist mit einer in der Zeichnung nicht dargestellten Ladeinduktionsspule versehen, die mit der Versorgungspannung angesteuert wird, wenn die Zündung eingeschaltet ist. Demzufolge ist die Halterung 40 zur induktiven Aufladung eines hierfür vorgesehenen Telekommunikationsgeräts 46 bestimmt. Durch die Verschiebung des als Fuß ausgebildeten Haltearms 43 wird das Telekommunikationsgerät vor der Rückwand 41 nach oben verschoben, bis die in der Rückwand 41 befindliche Elektronik eine maximale Übereinstimmung zwischen der in der Rückwand 41 befindlichen Ladeinduktionsspule und der im Telekommunikationsgerät 46 befindlichen Spule feststellt. Zu diesem Zeitpunkt gibt die Halterung 40 ein Anzeigesignal ab, das dem Nutzer anzeigt, dass nunmehr die optimale Stellung des Telekommunikationsgeräts 46 in der Halterung erreicht ist. In dem dargestellten Ausführungsbeispiel ist das Anzeigesignal ein optisches Anzeigesignal, das mit einer Leuchtdiode in der Rückwand erzeugt wird. Der als Fuß ausgebildete Haltearm 43 ist als Lichtleiter ausgebildet und leuchtet somit sofort erkennbar auf, wenn die für eine induktive Ladung geeignete Position des Telekommunikationsgeräts 46 erreicht ist. Danach sollte die Verstellung des als Fuß ausgebildeten Haltearms 43 beendet werden. Im Anschluss daran wird das Telekommunikationsgerät mit den Klemmbacken 44 der seitlichen Haltearme 42 seitlich geklemmt und dadurch in der Halterung 40 sicher gehalten. Das Lösen der Haltearme 42, 43 ist durch Betätigung einer Entriegelungstaste 47 möglich, die eine Verriegelungsverzahnung von den Haltearmen 42, 43 trennt, sodass diese in ihre ausgefahrene Stellung gemäß Figur 8 zurückfahrbar sind.

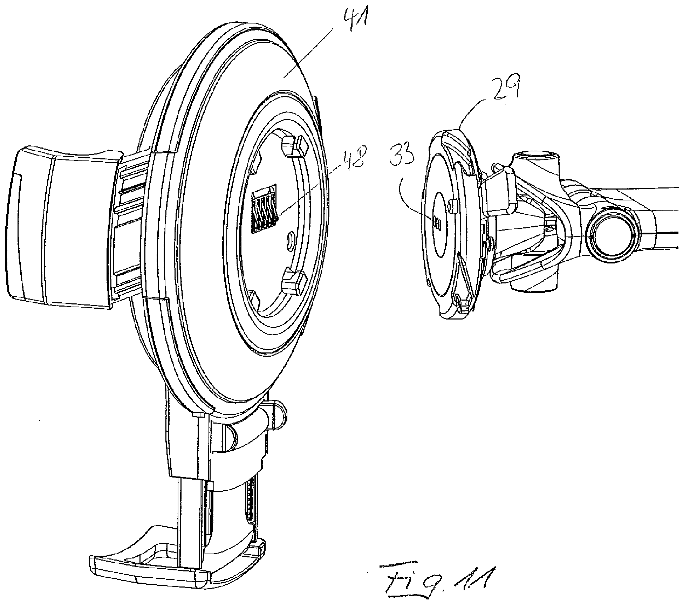

Figur 11 lässt die Rückseite der Rückwand 41 erkennen, die an die Form der Befestigungsplatte 29 angepasst ist. Auf der Rückseite befinden sich fünf Federkontakte 48, die symmetrisch angeordnet sind. Dabei ist der mittlere Federkontakt für das Massepotential vorgesehen und kontaktiert eine zentrische Kontaktfläche 33 der Befestigungsplatte 29. Die beiden neben dem mittleren Federkontakt befindlichen Federkontakte können beispielsweise mit dem Pluspol verbunden werden, während die äußeren Federkontakte beispielsweise mit dem Signal "Zündung ein/aus " verbunden werden können.

Für die beiden möglichen Verbindungsstellungen, die sich um 180° unterscheiden, wird die Halterung 40 somit immer korrekt gepolt mit den elektrischen Signalen bzw. Potentialen versorgt.

Die Halterung ist somit auch mit dem den Fuß bildenden Haltearm 43 nach oben an der Befestigungsplatte verriegelbar, wenn dies die Einbausituation erfordern sollte.

Das in der Halterung 40 gehaltene Telekommunikationsgerät 46 kann aufgrund des Zwischenstücks 20 in unterschiedlichen Höhen, Abständen und seitlichen Neigungen gehalten werden, sodass die für einen Betrachter optimale Position einstellbar ist.

In das erfindungsgemäße Aufnahmeteil können aber auch andere Geräte eingesetzt werden, wenn auf die Halterung eines Telekommunikationsgeräts 46 vorübergehend verzichtet wird. Insbesondere können in einem Fahrzeug beispielsweise auch zwei Aufnahmeteile 1 an geeigneten Stellen angebracht werden. Dieses Anbringen des Aufnahmeteils 1 erfolgt in an sich bekannter Weise durch Anlegen der Unterseite 3 an einer geeigneten Befestigungsstelle des Fahrzeugs mittels einer Schraube, die eine Gewindeschraube, eine Blechschraube o.ä. sein kann, mittels einer Klebfläche, also beispielsweise eines Klebebands, mittels eines Saugfußes o.ä.

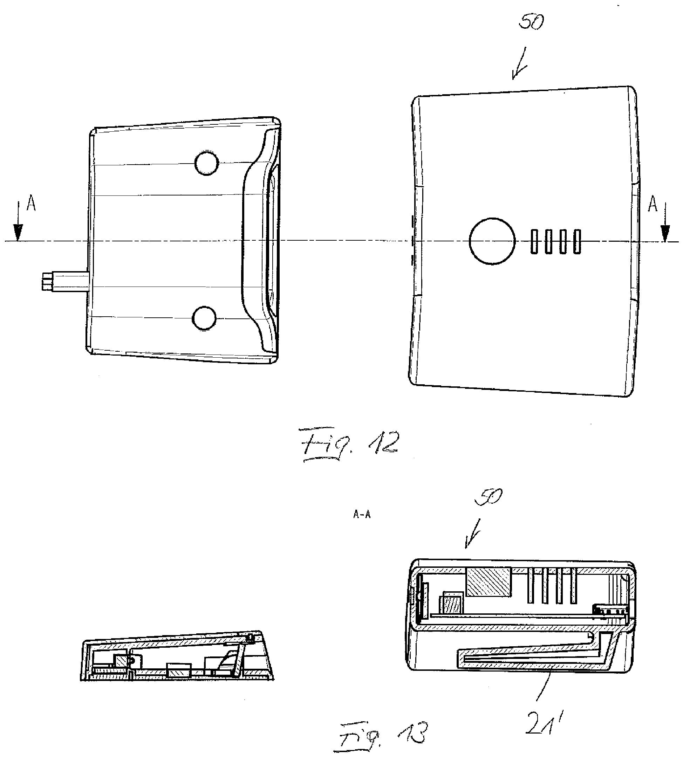

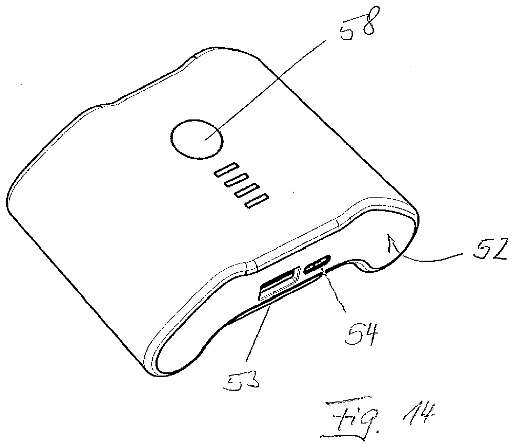

Das in den Figuren 12 bis 17 beispielhaft dargestellte Gerät ist mit einem Ansatz 21' versehen und so auf dem Aufnahmeteil 1 unmittelbar befestigbar, indem der Ansatz 21' in den Aufnahmekanal 10 eingeschoben wird. Das Aufnahmeteil 1 ist hierfür unverändert.

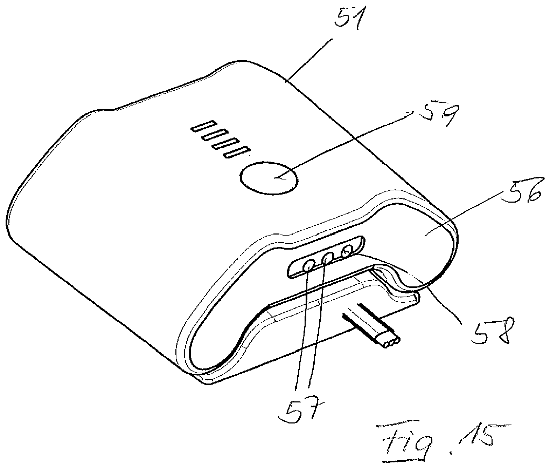

Wie Figur 15 verdeutlicht, kann die Form des Gehäuses 51 des Geräts 50 an die geschwungene Oberseite 4 des Aufnahmeteils angepasst sein, um so eine ästhetisch ansprechende Anordnung zu gewährleisten.

Das Gerät 50 weist an einer Stirnseite 52 des Gehäuses 51 geeignete Schnittstellen, beispielsweise einen USB-A-Port 53 und einen USB-C-Port 54 auf, über die beispielsweise Mobilfunkgeräte an das Gerät 50 anschließbar sind.

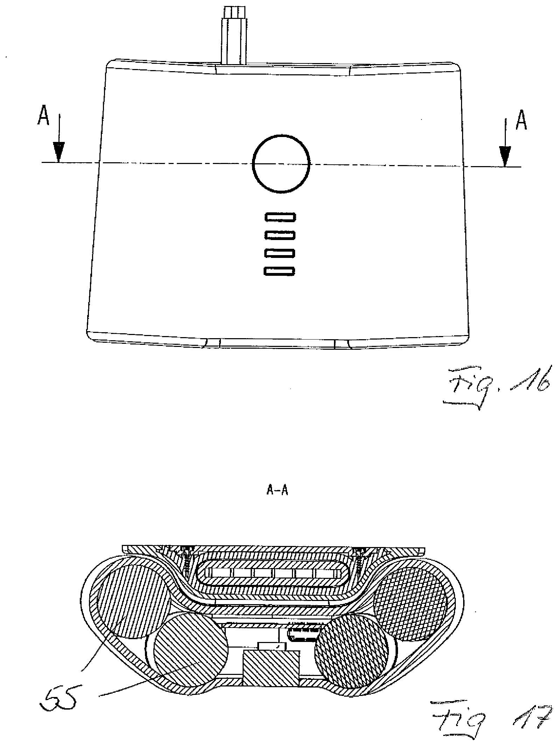

Wie die Schnittdarstellung in Figur 17 verdeutlicht, kann das Gerät 50 als Powerbank mit leistungsfähigen Akkumulatoren 55 gefüllt sein, die im Betrieb des Fahrzeugs über die Lichtmaschine oder die Fahrzeugbatterie aufladbar sind. Das Gerät 50 kann von dem Aufnahmeteil 1 abgenommen werden und dann zum Aufladen von beispielsweise Mobilfunkgeräten verwendet werden, wenn deren interner Akkumulator entleert ist.

Figur 15 zeigt noch, dass das Gerät 50 auf einer gegenüberliegenden Stirnwand 56 mit optischen Anzeigen 57 versehen sein kann, mit denen ein Betriebszustand anzeigbar ist. Das Gerät kann aber auch mit einer Lampe 58 beispielsweise als Taschenlampe benutzbar sein. Eine auf der Oberseite des Geräts angebrachte Taste 59 dient dabei als Einschalttaste für den Taschenlampenmodus. Dieser kann durch die Taste 59 in unterschiedliche Betriebsarten umgeschaltet werden, beispielsweise Dauerleuchten, Blinken oder SOS-Signal als Morsezeichen. Ein langes Drücken der Taste 59 bewirkt das Ein- bzw. Ausschalten der Taschenlampenfunktion, während ein kurzes Drücken der Taste 59 ein sequenzielles Umschalten des jeweiligen Leuchtmodus bewirkt.

Das als Powerbank dargestellte Gerät 50 dient nur zur Illustration der Möglichkeiten eines zusätzlichen Geräts für das Aufnahmeteil 1. Selbstverständlich sind auch andere Geräte in Verbindung mit dem Aufnahmeteil 1 möglich.

## Patentansprüche

1. Haltersystem für ein elektronisches Gerät (46) in einem Fahrzeug mit einem zur ortsfesten Befestigung vorgesehenen Aufnahmeteil (1) und einer in das Aufnahmeteil (1) einsetzbaren Halterung (40), an der das elektronische Gerät (46) lösbar befestigbar ist, wobei das Aufnahmeteil (1) einen Aufnahmekanal (10) mit einer schlitzförmigen Eintrittsöffnung (7) aufweist, in den ein komplementär zum Aufnahmekanal (10) geformter, im montierten Zustand mit der Halterung (40) verbundener Ansatz (21) in einer Einschubrichtung einschiebbar und im eingeschobenen Zustand festlegbar ist, **dadurch gekennzeichnet, dass** in wenigstens einer Begrenzung des Aufnahmekanals (10) wenigstens ein Magnet (15) so angeordnet ist, dass in der Einschubrichtung wirksame Magnetpole (N, S) entstehen und dass in entsprechender Weise im Ansatz (21) Magnetpole (N, S) ausgebildet sind, die bei richtiger Ausrichtung den Ansatz in eine Festlegestellung in dem Aufnahmekanal (10) hineinziehen und bei falscher Ausrichtung das Erreichen der Festlegestellung behindern.

2. Haltersystem nach Anspruch 1, **dadurch gekennzeichnet, dass** sich der Ansatz (21) in der Festlegestellung im Aufnahmekanal (10) in einer mechanischen Rastposition befindet.

3. Haltersystem nach Anspruch 1 oder 2, **dadurch gekennzeichnet, dass** das Aufnahmeteil (1) mit elektrischen Anschlussleitungen (8) verbindbar ist und Anschlusskontakte (12) in einer Stirnwand (11) des Aufnahmekanals (10) aufweist und dass der Ansatz (21) mit die Anschlusskontakte (12) in der Festlegstellung kontaktierenden Kontaktelementen und damit verbundenen Leitungen zur Zuführung elektrischer Potentiale zu der Halterung (40) versehen ist.

4. Haltersystem nach Anspruch 3, **dadurch gekennzeichnet, dass** die Stirnwand (11) des Aufnahmekanals (10) mit wenigstens einem Vorsprung (13) neben den Anschlusskontakten (12) versehen ist und dass der Ansatz (21) wenigstens eine den Vorsprung (13) im eingeschobenen Zustand aufnehmende Ausnehmung (34) aufweist.

5. Haltersystem nach einem der Ansprüche 1 bis 4, **dadurch gekennzeichnet, dass** der Aufnahmekanal (10) im Bereich der schlitzförmigen Eintrittsöffnung (7) eine wenigstens doppelt so große Breite wie Höhe aufweist, wobei sich die Höhe mit zunehmender Entfernung von der Eintrittsöffnung (7) verringert und dass der Ansatz (21) eine entsprechende Verringerung seiner Höhe aufweist.

6. Haltersystem nach einem der Ansprüche 1 bis 5, **dadurch gekennzeichnet, dass** die Eintrittsöffnung (7) mit einer schwenkbaren Klappe (16) versehen ist, die mittels einer Feder in eine die Eintrittsöffnung (7) verschließende Stellung vorgespannt ist und durch den eingeschobenen Ansatz (21) in eine den Aufnahmekanal (10) öffnende Stellung verschwenkt ist.

7. Haltersystem nach einem der Ansprüche 1 bis 6, **dadurch gekennzeichnet, dass** der Ansatz Teil eines Zwischenstücks (20) ist, der als schwenkbarer Arm ausgebildet ist, der an seinem freien Ende eine Befestigungsplatte (29) zur Befestigung der Halterung (40) aufweist.

8. Haltersystem nach Anspruch 7, **dadurch gekennzeichnet, dass** der schwenkbare Arm wenigsten drei Abschnitte (24, 26, 28) und zwei horizontale, voneinander beabstandete Drehgelenke (25, 27) sowie ein senkrecht dazu stehendes vertikales Drehgelenk (30) aufweist.

9. Haltersystem nach einem der Ansprüche 1 bis 8, **dadurch gekennzeichnet, dass** die Halterung (40) zur Aufnahme unterschiedlicher Telekommunikationsgeräte mit verstellbaren Haltearmen (42, 43) versehen ist.

10. Haltersystem nach Anspruch 9, **dadurch gekennzeichnet, dass** die Halterung (40) eine Induktionsladespule in ihrer Rückwand (41) und eine Anzeige aufweist, die eine korrekte Positionierung des für eine induktive Ladung vorgesehenen Telekommunikationsgeräts (46) vor der Induktionsladespule bei einer Verstellung eines als Fuß ausgebildeten und das Telekommunikationsgerät (46) tragenden Haltearms (43) anzeigt.

11. Haltersystem nach Anspruch 9 oder 10, **dadurch gekennzeichnet dass** zwei seitliche Haltearme (42) nur gekoppelt miteinander verstellbar sind, sodass unterschiedlich breite Telekommunikationsgeräte (46) immer nur mittig vor der Rückwand (41) positionierbar sind.

## Claims

1. Holding system for an electronic device (46) in a vehicle, having a receiving part (1) provided for immovable fastening, and a mount (40), to which the electronic device (46) can be removably fastened, which can be inserted into the receiving part (1), wherein the receiving part (1) comprises a receiving socket (10) with a slot-like entrance opening (7) into which a projection (21), with a shape complementing the receiving socket (10) and connected in the mounted state to the mount (40) when fitted, can be pushed in a push-in direction and can be fixed in the pushed-in state **characterized in that** at least one magnet (15) is arranged in at least one side of the receiving socket (10) such that magnetic poles (N, S) result which are active in the push-in direction, and **in that** magnetic poles (N, S) are correspondingly formed in the projection (21) which, when there is correct orientation, draw the projection into a fixed position in the receiving socket (10) and, when there is incorrect orientation, hinder the achievement of the fixed position.

2. Holding system according to Claim 1, **characterized in that**, in the fixed position in the receiving socket (10), the projection (21) is situated in a mechanical locking position.

3. Holding system according to Claim 1 or 2, **characterized in that** the receiving part (1) can be connected to electrical connection cables (8) and has connection contacts (12) in an end wall (11) of the receiving socket (10), and **in that** the projection (21) is provided with contact elements contacting the connection contacts (12) in the fixed position, and with cables connected thereto for supplying electric potential to the mount (40).

4. Holding system according to Claim 3, **characterized in that** the end wall (11) of the receiving socket (10) is provided with at least one protrusion (13) next to the connection contacts (12), and **in that** the projection (21) has at least one recess (34), which receives the protrusion (13) in the pushed-in state.

5. Holding system according to one of Claims 1 to 4, **characterized in that** in the region of the slot-shaped entrance opening (7) the width of the receiving socket (10) is at least twice its height, wherein the height reduces the greater the distance from the entrance opening (7), and **in that** there is a corresponding reduction in the height of the projection (21).

6. Holding system according to one of Claims 1 to 5, **characterized in that** the entrance opening (7) is provided with a hinged flap (16) which is pretensioned by means of a spring into a position closing the entrance opening (7) and is pivoted by the pushed-in projection (21) into a position opening the receiving socket (10).

7. Holding system according to one of Claims 1 to 6, **characterized in that** the projection is part of an intermediate piece (20) which is designed as a pivotable arm, the free end of which has a fastening plate (29) for fastening the mount (40).

8. Holding system according to Claim 7, **characterized in that** the pivotable arm has at least three sections (24, 26, 28) and two horizontal swivel joints (25, 27) spaced apart from each other and a vertical swivel joint (30) perpendicular thereto.

9. Holding system according to one of Claims 1 to 8, **characterized in that** the mount (40) is provided for receiving different telecommunications devices with adjustable holding arms (42, 43).

10. Holding system according to Claim 9, **characterized in that** the mount (40) has an induction coil in its rear wall (41) and a display which displays a correct positioning of the telecommunications device (46) provided for inductive charging in front of the induction coil during an adjustment of a holding arm (43) which takes the form of a base and carries the telecommunications device (46).

11. Holding system according to Claim 9 or 10, **characterized in that** two lateral holding arms (42) can be adjusted only when coupled to each other so that telecommunications devices (46) of different widths can always be positioned only centrally in front of the rear wall (41).

## Revendications

1. Système de support pour un appareil électronique (46) dans un véhicule comprenant une partie de réception (1) prévue pour être fixée en position et un support de fixation (40) pouvant être inséré dans la partie de réception (1), sur lequel l'appareil électronique (46) peut être fixé de manière amovible, la partie de réception (1) présentant un canal de réception (10) avec une ouverture d'entrée (7) en forme de fente, dans laquelle peut être enfoncée dans une direction d'enfoncement, et fixée dans un état enfoncé, une pièce rapportée (21) formée de manière complémentaire au canal de réception (10), connectée dans l'état monté au support de fixation (40), **caractérisé en ce que** dans au moins une limitation du canal de réception (10) est disposé au moins un aimant (15) de telle sorte que l'on dispose de pôles magnétiques (N, S) agissant dans la direction d'enfoncement et que des pôles magnétiques (N, S) soient réalisés de manière correspondante dans la pièce rapportée (21), lesquels, lorsqu'elle est correctement orientée, attirent la pièce rapportée (21) dans une position de fixation dans le canal de réception (10), et, lorsqu'elle est mal orientée, l'empêchent d'atteindre la position de fixation.

2. Système de support selon la revendication 1, **caractérisé en ce que** la pièce rapportée (21), dans la position de fixation dans le canal de réception (10), se trouve dans une position d'encliquetage mécanique.

3. Système de support selon la revendication 1 ou 2, **caractérisé en ce que** la partie de réception (1) peut être connectée à des lignes de raccordement électrique (8) et présente des contacts de raccordement (12) dans une paroi frontale (11) du canal de réception (10) et **en ce que** la pièce rapportée (21) est pourvue d'éléments de contact venant en contact avec les contacts de raccordement (12) dans la position de fixation et avec des lignes connectées à ceux-ci pour l'alimentation de potentiels électriques au support de fixation (40).

4. Système de support selon la revendication 3, **caractérisé en ce que** la paroi frontale (11) du canal de réception (10) est pourvue d'au moins une saillie (13) à côté des contacts de raccordement (12), et **en ce que** la pièce rapportée (21) présente au moins un évidement (34) recevant la saillie (13) dans l'état enfoncé.

5. Système de support selon l'une quelconque des revendications 1 à 4, **caractérisé en ce que** le canal de réception (10) présente, dans la région de l'ouverture d'entrée en forme de fente (7), une largeur au moins deux fois plus grande que sa hauteur, la hauteur diminuant avec l'augmentation de l'éloignement de l'ouverture d'entrée (7) et **en ce que** la pièce rapportée (21) présente une réduction de hauteur correspondante.

6. Système de support selon l'une quelconque des revendications 1 à 5, **caractérisé en ce que** l'ouverture d'entrée (7) est pourvue d'un clapet pivotant (16) qui est précontraint au moyen d'un ressort dans une position fermant l'ouverture d'entrée (7) et est pivoté par la pièce rapportée enfoncée (21) dans une position ouvrant le canal de réception (10).

7. Système de support selon l'une quelconque des revendications 1 à 6, **caractérisé en ce que** la pièce rapportée fait partie d'une pièce intermédiaire (20) qui est réalisée en tant que bras pivotant qui présente au niveau de son extrémité libre une plaque de fixation (29) pour la fixation du support de fixation (40).

8. Système de support selon la revendication 7, **caractérisé en ce que** le bras pivotant présente au moins trois portions (24, 26, 28) et deux articulations pivotantes horizontales (25, 27) espacées l'une de l'autre ainsi qu'une articulation pivotante verticale (30) perpendiculaire à celles-ci.

9. Système de support selon l'une quelconque des revendications 1 à 8, **caractérisé en ce que** le support de fixation (40) est prévu pour recevoir différents appareils de télécommunication avec des bras de retenue déplaçables (42, 43).

10. Système de support selon la revendication 9, **caractérisé en ce que** le support de fixation (40) présente une bobine de charge par induction dans sa paroi arrière (41) et un indicateur, laquelle indique un positionnement correct de l'appareil de télécommunication (46) prévu pour une charge par induction, devant la bobine de charge par induction dans le cas d'un déplacement d'un bras de retenue (43) réalisé en tant que pied et portant l'appareil de télécommunication (46).

11. Système de support selon la revendication 9 ou 10, **caractérisé en ce que** deux bras de retenue latéraux (42) peuvent seulement être déplacés de manière accouplée l'un à l'autre de telle sorte que des appareils de télécommunication (46) de largeurs différentes puissent toujours seulement être positionnés centralement devant la paroi arrière (41).
